# EUROPÄISCHE PATENTANMELDUNG

(11) **EP 2 147 838 A2**
(43) Veröffentlichungstag der Anmeldung: **27.01.2010**
(21) Anmeldenummer: 09100364.0
(22) Anmeldetag: 20.07.2009
(51) Int. Cl.: B60S 1/26, B60S 1/34

(54) **Scheibenwischerantrieb sowie Bausatz für einen Scheibenwischerantrieb**

(30) Priorität: 24.07.2008 DE 102008040703
(71) Anmelder: ROBERT BOSCH GMBH, 70442 Stuttgart (DE)
(72) Erfinder: Hawighorst, Achim, 77830 Buehlertal (DE); Guettinger, Joachim, 77855 Achern (DE); Wegner, Norbert, 77815 Buehl (DE)

(57) **Zusammenfassung**

Scheibenwischerantrieb (1), insbesondere Scheibenwischerdirektantrieb, umfassend einen Elektromotor (31), ein vom Elektromotor angetriebenes Getriebe (4) mit einem Abtriebszahnrad (2) und eine vom Abtriebszahnrad (2) pendelnd angetriebene Wischerwelle zum Festlegen eines Wischerarms (22). Erfindungsgemäß ist vorgesehen, dass die Abtriebswelle (5) mit Befestigungsmitteln (6) am Abtriebszahnrad (2) festegelegt ist.

## Beschreibung

### Stand der Technik

Die Erfindung betrifft einen Scheibenwischerantrieb gemäß dem Oberbegriff des Anspruchs 1 sowie einen Bausatz für einen Scheibenwischerantrieb gemäß dem Oberbegriff des Anspruchs 11.

Bisher ist es üblich, für unterschiedliche Fahrzeugtypen applikationsspezifische Scheibenwischerantriebe einzusetzen. Bei so genannten Direktantrieben wird dabei eine Abtriebswelle des Scheibenwischerantriebs nicht über ein Gestänge, sondern unmittelbar über ein als Schneckengetriebe ausgebildetes Verzahnungsgetriebe mit einem Abtriebsrad angetrieben, wobei die Abtriebswelle einstückig mit dem Abtriebszahnrad ausgebildet ist. Es bestehen Bestrebungen einen Scheibenwischerantrieb zu entwickeln, der für eine Vielzahl von Anwendungen, d.h. für eine Vielzahl unterschiedlicher Kraftfahrzeuge einsetzbar ist.

### Offenbarung der Erfindung

### Technische Aufgabe

Der Erfindung liegt die Aufgabe zugrunde, einen insbesondere als Scheibenwischerdirektantrieb (d.h. ohne Gestänge) ausgebildeten Scheibenwischerantrieb vorzuschlagen, der durch nur geringfügige Modifikationen bzw. Anpassungen universell einsetzbar ist. Ferner besteht die Aufgabe darin, einen Bausatz für einen derartigen, universell einsetzbaren Scheibenwischerantrieb vorzuschlagen.

### Technische Lösung

Diese Aufgabe wird hinsichtlich des Scheibenwischerantriebes mit den Merkmalen des Anspruchs 1 und hinsichtlich des Bausatzes mit den Merkmalen des Anspruchs 11 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Die Erfindung hat erkannt, dass es zur Lösung der Aufgabe vorteilhaft ist, wenn der Elektromotor und das Getriebe des Scheibenwischerantriebs unabhängig vom Fahrzeugtyp immer gleich ausgeführt ist. Die Kundenindividualität im Hinblick auf die Eigenschaften des Scheibenwischerantriebs sollte dabei möglichst über eine Steuerungssoftware realisiert werden. Die Erfindung hat ferner erkannt, dass es, um Fahrzeugtypvarianten nicht auf das Getriebe und den Elektromotor zu übertragen, notwendig ist, für jeden Anwendungszweck (Fahrzeugtyp) eine individuelle Abtriebswelle, insbesondere eine Abtriebswelle mit einem individuellen Längenmaß, einzusetzen. Diese Forderungen können bei einem nach dem Konzept der Erfindung ausgebildeten Scheibenwischerantrieb dadurch überraschend einfach erfüllt werden, dass die Abtriebswelle nicht wie im Stand der Technik mit dem, vorzugsweise als Schneckenrad zum Zusammenwirken mit einer Getriebeschnecke ausgebildeten, Abtriebszahnrad des Getriebes des Scheibenwischerantriebs verbunden ist, sondern mit Hilfe von Befestigungsmitteln am Abtriebszahnrad festgelegt ist. Dabei ist es besonders bevorzugt, wenn die Abtriebswelle sich senkrecht zu den Stirnseiten des Abtriebszahnrades erstreckt und mit Hilfe der Befestigungsmittel an einem zentrischen Nabenbereich festgelegt ist. Durch eine von dem Abtriebszahnrad unabhängig wählbare Abtriebswelle ist es erstmals möglich, für unterschiedliche Kraftfahrzeugtypen den gleichen Elektromotor und das gleiche Getriebe einzusetzen, also nahezu den gesamten identischen Scheibenwischerantrieb (bis auf die Abtriebswelle) - die Anpassung an die individuellen Anforderungen eines Kraftfahrzeugtyps wird von mechanischer Seite über eine entsprechende Dimensionierung der Abtriebswelle realisiert. Die Befestigungsmittel sind derart ausgebildet, dass diese eine kraftschlüssige Verbindung zwischen der Abtriebswelle und dem Abtriebszahnrad durch Formschluss und/oder Reibschluss herstellen, wobei die kraftschlüssige Verbindung so ausgelegt sein muss, dass die im Betrieb in Umfangsrichtung wirkenden Kräfte ohne weiteres abgestützt werden können. Im Hinblick auf die Montage der Abtriebswelle gibt es zwei Alternativen. Gemäß einer ersten Alternative kann die Abtriebswelle zunächst am Abtriebszahnrad festgelegt werden, bevor das Abtriebszahnrad mit daran montierter Abtriebswelle in das Getriebe, insbesondere ein Schneckengetriebe, des Scheibenwischerantriebs integriert wird. Alternativ ist es möglich, die Abtriebswelle bei bereits im Getriebe montiertem Abtriebszahnrad an diesem festzulegen.

In Weiterbildung der Erfindung ist mit Vorteil vorgesehen, dass die Befestigungsmittel derart ausgebildet sind, dass die Abtriebswelle jederzeit wieder ausgetauscht werden kann, d.h. dass die Abtriebswelle mittels der Befestigungsmittel lösbar am Abtriebszahnrad festlegbar ist. Bei einer alternativen, ebenfalls realisierbaren zweiten Ausführungsform der Befestigungsmittel können diese als sogenannte Einmalbefestigungen ausgeführt sein. Diese bewirken, dass die Abtriebswelle, wenn diese einmal am Abtriebszahnrad festgelegt ist nicht mehr bzw. nicht ohne Zerstörung der Abtriebswelle und/oder des Abtriebszahnrades von dem Abtriebszahnrad gelöst werden kann. Hierzu eignen sich insbesondere Einmalrastmittel.

Ganz besonders bevorzugt ist eine Ausführungsform der Befestigungsmittel, bei der diese die Abtriebswelle mittels einer, insbesondere axialen, Pressverbindung an dem Abtriebszahnrad festlegend ausgebildet sind. Unter einer Pressverbindung wird dabei eine Verbindung verstanden, bei der die Abtriebswelle, vorzugsweise in Richtung ihrer Längserstreckung, d.h. in axialer Richtung, gegen das Abtriebszahnrad, genauer gegen eine Abtriebswellenaufnahme des Abtriebszahnrades, gepresst wird.

Besonders bevorzugt ist es dabei, wenn die Pressverbindung durch den Einsatz einer die Abtriebswelle axial durchsetzenden Befestigungsschraube realisiert ist, die die Abtriebswelle gegen das Abtriebszahnrad verspannt. Dabei stützt sich die Befestigungsschraube, vorzugsweise mit einer ringförmigen Unterkopffläche an einer korrespondierenden Ringschulter der Abtriebswelle ab und drückt (presst) diese somit in axialer Richtung gegen die Abtriebswelle. Wie erwähnt, ist die Befestigungsschraube zumindest abschnittsweise in einer zentrischen, axialen Durchgangsöffnung der als Hohlwelle ausgebildeten Abtriebswelle angeordnet und daher von außen nicht oder nur schwer sichtbar, wodurch das ästhetische Erscheinungsbild des Scheibenwischerantriebs optimiert wird. Darüber hinaus ist die Befestigungsschraube vor Umwelteinflüssen, wie Feuchtigkeit, besser geschützt. Auch resultiert aus der Anordnung der Befestigungsschraube in der Durchgangsöffnung ein verbesserter Schutz gegen Verschmutzung. Da die Abtriebswelle als Hohlwelle ausgeführt ist, kann diese bei gleicher Materialmenge durch die Realisierung eines größeren Durchmessers größere Drehmomente in Umfangsrichtung übertragen, als dies mit einer Vollmaterialwelle mit einem im Vergleich geringeren Außendurchmesser möglich wäre.

Von besonderem Vorteil ist es, wenn die Befestigungsschraube mit einem endseitigen Außengewinde in ein im Abtriebszahnrad vorgesehenes Innengewinde eingreift. Dabei befindet sich das Innengewinde - wie noch erläutert werden wird - bevorzugt nicht unmittelbar im Kunststoff-Abtriebszahnrad, sondern in einem in diesem festgelegten Einlageelement.

Besonders zweckmäßig ist eine Ausführungsform, bei der die Befestigungsschraube zur Realisierung einer Pressverbindung zwischen der Abtriebswelle und dem Abtriebszahnrad gleichzeitig als Befestigungsschraube zur Fixierung eines Wischerarms an der Abriebswelle dient, wobei sich in diesem Fall die Befestigungsschraube vorzugsweise mit einer ringförmigen Unterkopffläche an einer entsprechenden, ringförmigen Abstützfläche des Wischerarm abstützt und diesen in axialer Richtung gegen die Abtriebswelle presst, die sandwichartig zwischen dem Wischerarm und dem Abtriebszahnrad angeordnet ist.

In Weiterbildung der Erfindung ist mit Vorteil vorgesehen, dass die Abtriebswelle an ihrer dem Abtriebszahnrad zugewandten Seite nicht eben, sondern außen- oder innenkegelstumpfförmig ausgeformt ist, um eine möglichst große Kontaktfläche zu dem Abtriebszahnrad und damit möglichst große Haftreibungskräfte zur Herstellung einer robusten reibschlüssigen Verbindung bereitzustellen. Darüber hinaus wird ein Verkippen der Abtriebswelle durch die optimierte Kontaktfläche verbessert. Zur Realisierung einer besonders robusten Verbindung zwischen Abtriebswelle und Abtriebszahnrad wirkt die außen- oder innenkegelstumpfförmige Stirnseite (Kontaktfläche) der Abtriebswelle mit einer korrespondierenden, formkongruenten Gegenfläche im Abtriebszahnrad zusammen.

Um eine besonders robuste Verbindung zwischen Abtriebswelle und Abtriebszahnrad zu realisieren, ist eine Ausführungsform bevorzugt, bei der die Abtriebswelle an einem fest mit dem Abtriebszahnrad verbundenen Einlegeelement festgelegt ist. Dabei kann das Einlegeelement mehrteilig ausgeführt werden, ist jedoch vorzugsweise im Hinblick auf eine vereinfachte Montage einstückig ausgeführt. Durch das Vorsehen des Einlegeelementes wird die maximal mögliche Drehmomentübertragung im Kontaktbereich zwischen Abtriebswelle und Abtriebszahnradnabe erhöht. Bevorzugt stellt das Einlegeelement eine zur Stirnseite der Abtriebswelle formkongruente, insbesondere außen- oder innenkegelstumpfförmige Aufnahme (Kontaktfläche) bereit. Ganz besonders bevorzugt ist es, wenn das Einlegeelement nicht wie das eigentliche Abtriebszahnrad aus Kunststoff, sondern aus Metall ausgebildet ist. Zur Gewährleistung einer festen Verbindung zwischen Einlegeelement und dem restlichen Abtriebszahnrad ist das Einlegeelement vorzugsweise von dem Kunststoffmaterial des Abtriebszahnrades teilweise umspritzt.

Besonders zweckmäßig ist eine Ausführungsform, bei der ein Innengewinde zum Befestigen der als Abtriebswelle dienenden Befestigungsschraube im Einlegeelement ausgebildet ist, wodurch die Robustheit der Verbindung zwischen der Abtriebswelle und dem Abtriebszahnrad weiter optimiert werden kann.

Im Hinblick auf die Anordnung des Einlegeelementes im Abtriebszahnrad gibt es unterschiedliche Möglichkeiten. So ist es realisierbar, dass das, vorzugsweise einen Nabenabschnitt des Abtriebszahnrads bildende, Einlegeelement das Abtriebszahnrad zumindest in einer Axialrichtung, vorzugsweise in beiden Axialrichtungen überragt. Alternativ ist es möglich, dass das Einlegeelement, vollständig innerhalb der Stirnseiten des Abtriebszahnrades aufgenommen ist.

Die Erfindung führt auch auf einen Bausatz für einen Scheibenwischerantrieb, insbesondere einen Scheibenwischerantrieb, ganz besonders bevorzugt für einen zuvor beschriebenen Scheibenwischerantrieb. Der Bausatz umfasst mindestens einen Elektromotor und ein von dem Elektromotor antreibbares, ein Abtriebszahnrad aufweisendes, vorzugsweise als Schneckengetriebe ausgebildetes, Getriebe. Das Abtriebszahnrad dient zum pendelnden Antreiben einer Abtriebswelle, die, insbesondere lösbar an dem Abtriebszahnrad mit Hilfe von Befestigungsmitteln festlegbar ist. Ein nach dem Konzept der Erfindung ausgebildeter Bausatz umfasst dabei zwei sich in zumindest einem Merkmal, vorzugsweise in ihrer Axialerstreckung, unterscheidende Abtriebswellen, die alternativ an dem Abtriebszahnrad festlegbar sind. Die sich in mindestens einem Merkmal unterscheidenden Abtriebswellen weisen also bevorzugt einen identischen Kontaktbereich (Schnittstelle) zum Abtriebszahnrad auf. Mit Hilfe des zuvor beschriebenen Bausatzes ist es möglich, Scheibenwischerantriebe in mechanischer, hinsichtlich ausschließlich durch die Wahl einer individuell ausgebildeten Abtriebswelle an unterschiedliche Applikationen anzupassen.

Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: ein erstes Ausführungsbeispiel eines unvollständig dargestellten Scheibenwischerdirektantriebes, bei dem eine gemeinsame Befestigungsschraube zum Festlegen der Abtriebswelle am Abtriebszahnrad und zum Festlegen des Wischerarms an der Abtriebswelle vorgesehen ist, und
- Fig. 2:: ein alternatives Ausführungsbeispiel eines nur unvollständig dargestellten Scheibenwischerantriebes, bei dem die Befestigungsschraube ausschließlich zum Treffen der Abtriebswelle gegen das Abtriebszahnrad dient.

### Ausführungsformen der Erfindung

In den Figuren sind gleiche Bauteile und Bauteile mit der gleichen Funktion mit den gleichen Bezugszeichen gekennzeichnet.

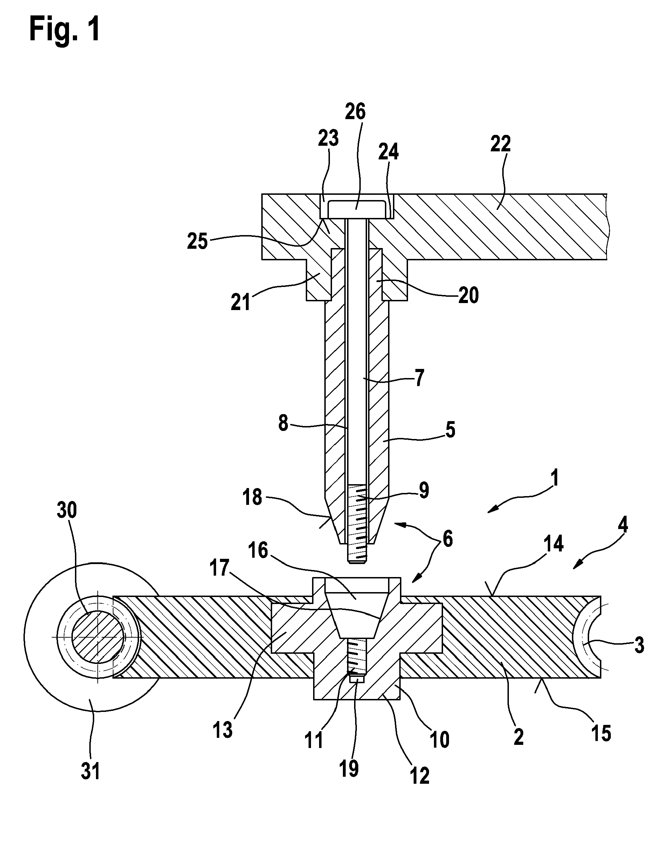

In Fig. 1 ist ausschnittsweise ein als Scheibenwischerdirektantrieb ausgebildeter Scheibenwischerantrieb 1 für ein Kraftfahrzeug gezeigt. Zu erkennen ist ein in einer Schnittdarstellung gezeigtes Abtriebszahnrad 2, welches mit einer Außenverzahnung 3 mit einer Getriebeschnecke 30 eines Getriebes 4. Das Getriebe 4, genauer die Getriebeschnecke 30 wird von einem Elektromotor 31 (Reversiermotor) angetrieben.

Aus Fig. 1 ist ferner eine Abtriebswelle 5 (Wischerwelle) zu erkennen, die mit Hilfe von Befestigungsmitteln 6 am Abtriebszahnrad 2 festlegbar ist. Die Befestigungsmittel 6 umfassen dabei eine als Schaftschraube ausgebildete, langgestreckte Befestigungsschraube 7, die eine zentrische Durchgangsöffnung 8 in der als Hohlwelle ausgebildeten Abtriebswelle 5 in axialer Richtung durchsetzt. Endseitig weist die Befestigungsschraube 7 ein Außengewinde 9 auf, das zum Verschrauben mit einem in einem Einlegeelement 10 der Befestigungsmittel 6 angeordneten Innengewinde ausgebildet ist. Das einstückige Einlegeelement 10 der Befestigungsmittel 6 ist aus Metall ausgebildet und bildet einen zentrischen Nabenabschnitt 12 des Abtriebszahnrades 2. Das metallische Einlegeelement 10 ist an seinem Außenumfang von dem Kunststoffmaterial des Abtriebszahnrades 2 umspritzt. Zur Realisierung einer robusten Verbindung zwischen Einlegeelement 10 und Abtriebszahnrad 2 umfasst das Einlegeelement 10 einen Umfangsbund 13, der sich in radialer Richtung erstreckt und der auf seiner Ober- sowie seiner Unterseite vom Kunststoffmaterial des Abtriebszahnrades 2 umschlossen ist.

Wie sich weiter aus Fig. 1 ergibt, überragt das Einlegeelement 10 beide Stirnseiten 14, 15 des Abtriebszahnrades 2 in axialer Richtung nach außen.

Stirnseitig ist in dem Einlegeelement 10 eine sich in axialer Richtung erstreckende Sacklochöffnung 16 eingebracht, die in ihrem in der Zeichnungsebene oberen Abschnitt eine abschnittsweise innenkegelstumpfförmige Aufnahme 17 für eine der Stirnseite 14 zugewandte Stirnseite 18 der Abtriebswelle 5 bildet. Dabei ist die Stirnseite 18 der als Hohlwelle ausgebildeten Abtriebswelle 5 außenkegelstumpfförmig ausgebildet, wobei die Aufnahme 17 formkongruent zur Stirnseite 18 ausgeformt ist. Die Aufnahme 17 umfasst, wie sich aus Fig. 1 ergibt, neben dem innenstumpfkegelförmigen Abschnitt einen in der Zeichnungsebene darüber angeordneten zylindrischen Abschnitt, dessen Innendurchmesser dem Außendurchmesser der Abtriebswelle 5 oberhalb der außenkegelstumpfförmigen Stirnseite 18 entspricht.

In axialer Richtung in der Zeichnungsebene unten schließt an die Aufnahme 17 eine Gewindebohrung 19 mit dem Innengewinde 11 zum Zusammenwirken mit dem Außengewinde 9 der Befestigungsschraube 7 an.

Ferner ergibt sich aus Fig. 1, dass ein in der Zeichnungsebene oberer, durchmesserreduzierter, endseitiger Abschnitt 20 der Abtriebswelle 5 radial außen umschlossen ist von einem hülsenförmigen Befestigungsabschnitt 21 eines sich im Wesentlichen senkrecht zur Abtriebswelle 5 erstreckenden Wischerarms 22. Der zylindrische, durchmesserreduzierte Abschnitt 20 ist an seinem Außenumfang gerändelt ausgeführt um somit eine formschlüssige Verbindung mit dem Befestigungsabschnitt 21 eingehen zu können.

Wie sich weiter aus Fig. 1 ergibt, ist in dem Wischerarm 22 eine Stufenöffnung 23 eingebracht, die eine Anlageschulter 24 für eine ringförmige Unterkopffläche 25 eines Schraubenkopfes 26 der Befestigungsschraube 7 bildet. An der Anlageschulter 24 stützt sich die Befestigungsschraube 7 in axialer Richtung ab und presst den Wischerarm 22 in axialer Richtung gegen die Abtriebswelle 5. Diese wird wiederum mit ihrer Stirnseite 18 im montierten Zustand gegen die Aufnahme 17 im Einlegeelement 10 gepresst.

Zur Montage wird beispielsweise zunächst der Wischerarm 22 auf den durchmesserreduzierten Abschnitt 20 der Abtriebswelle 5 gesteckt, woraufhin der Wischerarm 22 und die Abtriebswelle in die Aufnahme 17 des fest mit dem Abtriebszahnrad 2 verbundenen Einlegeelementes 10 eingeführt werden. Durch Verdrehen der Befestigungsschraube 7 im Innengewinde 11 werden das Abtriebszahnrad 2, die Abtriebswelle 5 und der Wischerarm 22 axial miteinander verspannt. Für unterschiedliche Anwendungen können unterschiedlich ausgebildete Abtriebswellen 5 und/oder unterschiedlich ausgebildete Wischerarme 22 eingesetzt werden.

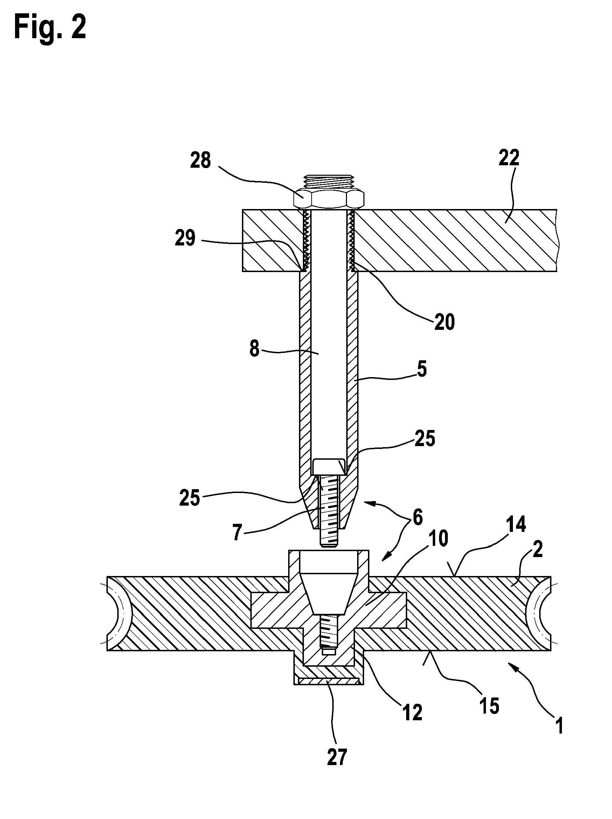

Das in Fig. 2 gezeigte Ausführungsbeispiel eines nur unvollständig dargestellten Scheibenwischerantriebs 1 entspricht im Wesentlichen dem zuvor beschriebenen und in Fig. 1 gezeigten Ausführungsbeispiel, so dass zur Vermeidung von Wiederholungen im Folgenden im Wesentlichen nur auf die Unterschiede zu dem vorgenannten Ausführungsbeispiel eingegangen wird. Im Hinblick auf die Gemeinsamkeiten wird auf die vorhergehende Figurenbeschreibung sowie auf Fig. 1 verwiesen.

Aus Fig. 2 ist zu entnehmen, dass das metallische Einlegeelement 10 nur die in der Zeichnungsebene obere Stirnseite 14 des Abtriebszahnrades 2 in axialer Richtung hin zur Abtriebswelle 5 überragt. Ansonsten ist das Einlegeelement 10 vollständig im Kunststoffmaterial des Abtriebszahnrades 2 aufgenommen.

Im Nabenabschnitt 12 des Abtriebszahnrades 2 ist auf der der oberen Stirnseite 14 abgewandten unteren Stirnseite 15 ein in das Kunststoffmaterial eingebettete Magnetelement 27 zum Zusammenwirken mit einem Positionssensor angeordnet.

Der wesentliche Unterschied zu dem Ausführungsbeispiel gemäß Fig. 1 besteht darin, dass die Befestigungsschraube 7 wesentlich verkürzt ausgeführt ist und ausschließlich zum Festlegen der Abtriebswelle 5 im Einlegeelement 10 des Abtriebszahnrades 2 dient. Hierzu stützt sich die Befestigungsschraube 7 mit einer ringförmigen Unterkopffläche 25 an einer Anlageschulter 24 ab, die im Gegensatz zu dem Ausführungsbeispiel gemäß Fig. 1 nicht am Wischerarm 22, sondern am Innenumfang der zentrischen, als Stufenbohrung ausgeführten Durchgangsöffnung 8 der als Hohlwelle ausgebildeten Abtriebswelle 2 gebildet ist. Der Wischerarm 22 ist in dem gezeigten Ausführungsbeispiel mittels einer Mutter 28 am durchmesserreduzierten Abschnitt 20 der Abtriebswelle 5 festgelegt, welcher mit einem Außengewinde versehen ist. Mittels der Mutter 28 wird der Wischerarm 22 gegen eine äußere Ringschulter 29 der Abtriebswelle 5 gepresst.

## Patentansprüche

1. Scheibenwischerantrieb, insbesondere Scheibenwischerdirektantrieb, umfassend einen Elektromotor, ein vom Elektromotor (31) angetriebenes Getriebe (4) mit einem Abtriebszahnrad (2) und eine vom Abtriebszahnrad (2) pendelnd angetriebene Wischerwelle zum Festlegen eines Wischerarms (22),
**dadurch gekennzeichnet,**
**dass** die Abtriebswelle (5) mit Befestigungsmitteln (6) am Abtriebszahnrad (2) festegelegt ist.

2. Scheibenwischerantrieb nach Anspruch 1,
**dadurch gekennzeichnet,**
**dass** die Befestigungsmittel (6) zum lösbaren festlegen der Abtriebswelle (5) am Abtriebszahnrad (2) ausgebildet sind.

3. Scheibenwischerantrieb nach einem der Ansprüche 1 oder 2,
**dadurch gekennzeichnet,**
**dass** die Befestigungsmittel (6) die Abtriebswelle (5) mittels einer Pressverbindung festlegend ausgebildet sind.

4. Scheibenwischerantrieb nach einem der vorhergehenden Ansprüche,
**dadurch gekennzeichnet,**
**dass** die Befestigungsmittel (6) zum Erzeugen einer, insbesondere axialen, Presskraft eine, zumindest abschnittsweise in einer Durchgangsöffnung (8) der als Hohlwelle ausgebildeten Abtriebswelle (5) angeordnete, Befestigungsschraube (7) umfassen.

5. Scheibenwischerantrieb nach Anspruch 4,
**dadurch gekennzeichnet,**
**dass** der Wischerarm (22) mittels der Befestigungsschraube (7) an der Abtriebswelle (5) festlegbar ist.

6. Scheibenwischerantrieb nach einem der vorhergehenden Ansprüche,
**dadurch gekennzeichnet,**
**dass** die Abtriebswelle (5) an einem dem Abtriebszahnrad (2) zugewandten Ende außen- oder innenkegelstumpfförmig ausgeformt ist, und vorzugsweise mit einer formkongruenten Aufnahme (17) des Abtriebszahnrades (2) zusammenwirkt.

7. Scheibenwischerantrieb nach einem der vorhergehenden Ansprüche,
**dadurch gekennzeichnet,**
**dass** die Befestigungsmittel (6) ein ein- oder mehrteiliges, fest mit dem Abtriebszahnrad (2) verbundenes, vorzugsweise einen Nabenabschnitt (12) des Abtriebszahnrades (2) bildendes Einlegeelement (10), insbesondere aus Metall, umfassen.

8. Scheibenwischerantrieb nach Anspruch 7,
**dadurch gekennzeichnet,**
**dass** das Einlegeelement (10) von einem Kunststoffmaterial des Abtriebszahnrades (2) umspritzt ist.

9. Scheibenwischerantrieb nach einem der Ansprüche 7 oder 8,
**dadurch gekennzeichnet,**
**dass** das Einlegeelement (10) ein Gewinde zum Festlegen einer Befestigungsschraube (7) der Befestigungsmittel (6) aufweist.

10. Scheibenwischerantrieb nach einem der Ansprüche 7 bis 9,
**dadurch gekennzeichnet,**
**dass** das Einlegeelement (10) an zumindest einer Axialseite des Abtriebszahnrades (2) hervorstehend angeordnet ist.

11. Bausatz für einen Scheibenwischerantrieb (1), vorzugsweise für einen Scheibenwischerdirektantrieb, insbesondere nach einem der vorhergehenden Ansprüche, umfassend mindestens einen Elektromotor und ein vom Elektromotor antreibbares, ein Abtriebszahnrad (2) aufweisendes Getriebe (4),
**dadurch gekennzeichnet,**
**dass** mindestens zwei, sich in mindestens einem Merkmal unterscheidende, vorzugsweise unterschiedlich lange, Abtriebswellen (5) zum alternativen Festlegen am Abtriebszahnrad (2) mit Hilfe von Befestigungsmitteln (6) vorgesehen sind.
